# EUROPEAN PATENT SPECIFICATION

(11) **EP 1 469 340 B1**
(45) Date of publication and mention of the grant of the patent: **29.08.2007**
(21) Application number: 02775264.1
(22) Date of filing: 27.09.2002
(51) Int. Cl.: G02F 1/1343, G02F 1/1335

(54) **REFLECTING ELECTRODE FORMING METHOD AND LIQUID CRYSTAL DISPLAY**
REFLEXIONSELEKTRODENAUSBILDUNGSVERFAHREN UND FLÜSSIGKRISTALLANZEIGE
PROCEDE DE FORMATION D'UNE ELECTRODE DE REFLEXION ET D'UN AFFICHEUR A CRISTAUX LIQUIDES

(30) Priority: 28.09.2001 JP 2001302579
(43) Date of publication of application: 20.10.2004
(73) Proprietor: TPO Hong Kong Holding Limited, Shatin, Hong Kong (CN)
(72) Inventor: HAMAWAKI, Yoshihiko, NL-5656 AA Eindhoven (NL)
(74) Representative: Hutter, Jacobus Johannes
(86) International application number: PCT/JP2002/010136
(87) International publication number: WO 2003/029889

(56) References cited:
- JP-A- 2 214 827
- JP-A- 7 318 929
- JP-A- 8 114 797
- JP-A- 10 268 347
- JP-A- 11 212 106
- US-A- 5 753 937
- US-A1- 2001 001 482
- PATENT ABSTRACTS OF JAPAN vol. 1996, no. 09, 30 September 1996 (1996-09-30) -& JP 08 114797 A (SEIKO EPSON CORP), 7 May 1996 (1996-05-07)
- PATENT ABSTRACTS OF JAPAN vol. 1999, no. 01, 29 January 1999 (1999-01-29) -& JP 10 268347 A (SHARP CORP), 9 October 1998 (1998-10-09)
- PATENT ABSTRACTS OF JAPAN vol. 1996, no. 04, 30 April 1996 (1996-04-30) -& JP 07 318929 A (CASIO COMPUT CO LTD), 8 December 1995 (1995-12-08)
- PATENT ABSTRACTS OF JAPAN vol. 1999, no. 13, 30 November 1999 (1999-11-30) -& JP 11 212106 A (MATSUSHITA ELECTRIC IND CO LTD), 6 August 1999 (1999-08-06)
- PATENT ABSTRACTS OF JAPAN vol. 2000, no. 23, 10 February 2001 (2001-02-10) -& JP 2001 168343 A (MITSUBISHI ELECTRIC CORP; SEIKO EPSON CORP), 22 June 2001 (2001-06-22)

## Description

### BACKGROUND OF THE INVENTION

### 1. Field of the Invention

The present invention relates to a method of forming a reflective electrode and a liquid crystal display device comprising a reflective electrode formed using this method.

### 2. Description of Related Art

In a liquid crystal display device comprising reflective electrodes, those reflective electrodes are provided with recesses or projections so as to have a desired reflective characteristic.

It is required to form a photosensitive resin patterned into a predetermined form below the reflective electrodes for the purpose of providing reflective electrodes with recesses or projections, so that there is a problem of increasing the number of manufacturing steps and a manufacturing cost.

Document JP 07318929 discloses a transflective liquid crystal display wherein holes are formed in the reflective electrode in each pixels.

### SUMMARY OF THE INVENTION

An object of the present invention is to provide a method of forming reflective electrodes with a reduced number of manufacturing steps and a reduced manufacturing cost, and to provide a liquid crystal display device to which this method is applied.

A method of forming reflective electrodes according to the present invention for achieving the object described above is a method of forming a plurality of reflective electrodes on a substrate as defined in claim 1.

In the method of forming reflective electrodes according to the present invention, a thickness changing region in which a thickness changes continuously is formed in the portion of the first film corresponding to each reflective electrode, so that the thickness changing region can be formed in each of the plurality of reflective electrodes. It is possible to provide the reflective electrode with a good reflective characteristic by forming the thickness changing region in each reflective electrode. Further, in the method of forming a reflective electrode according to the present invention, the thickness changing region is formed in the step of patterning the first film in such a way that the portion of the first film corresponding to each reflective electrode remains. Therefore, in the method of forming a reflective electrode according to the present invention, there is no need to additionally provide a step of forming only a thickness changing region in order to form the reflective electrode having a good reflective characteristic other than the step of patterning the first film in such a way that the portion of the first film corresponding to each reflective electrode remains, so that the reflective electrode having a desired diffusion characteristic can be formed without increasing the number of manufacturing steps.

A method of forming a reflective electrode according to the present invention is preferably characterized in that, in said patterning step, said thickness changing region is formed so as to have a slope whose inclination is greater than 0 degree and smaller than 10 degrees.

When the thickness changing region has the inclination angle described above, the reflective electrode can have a good reflective characteristic.

A method of forming a reflective electrode according to the present invention is preferably characterized in that, in said patterning step, said thickness changing region is formed in such a way that a ratio of a width of said thickness changing region to a maximum value of thickness of said thickness changing region is equal to or greater than 1.5.

When the ratio is equal to or greater than 1.5, the inclination angle greater than 0 degree and smaller than 10 degrees can be easily provided in the thickness changing region.

A method of forming a reflective electrode according to the present invention is preferably characterized in that said patterning step comprises a first step of forming a photosensitive film on said first film, a second step of exposing said photosensitive film to light and developing it to pattern said photosensitive film into a form corresponding to a pattern of said plurality of reflective electrodes, a third step of baking said patterned photosensitive film, and a fourth step of dry-etching said first film using said baked photosensitive film as an etching mask.

By means of the dry-etching of the first film using the baked photosensitive film as an etching mask, the thickness changing region can be easily formed in each reflective electrode.

A method of forming a reflective electrode according to the present invention is preferably characterized in that each of a plurality of pixel regions is provided with a respective one of said reflective electrodes, that each of said reflective electrodes has a plurality of holes, and that, in said second step, said photosensitive film is patterned in such a way that a portion of said photosensitive film corresponding to a periphery of each of said plurality of reflective electrodes and a portion of said photosensitive film corresponding to each of said plurality of holes are removed

By means of the patterning of the photosensitive film as described above, one reflective electrode having a plurality of holes can be formed in each of the plurality of pixel regions.

A method of forming a reflective electrode according to the present invention is preferably characterized in that each of a plurality of pixel regions is provided with at least two of said reflective electrodes, and that, in said second step, said photosensitive film is patterned in such a way that a portion of said photosensitive film corresponding to a periphery of each of said plurality of reflective electrodes is removed.

By means of the patterning of the photosensitive film as described above, a plurality of reflective electrodes can be formed in each of a plurality of pixel regions.

A method of forming a reflective electrode according to the present invention preferably comprises a step of forming a plurality of transparent electrode before said step of forming said first film.

By means of the forming of the transparent electrodes, a liquid crystal display can be constructed so as to operate in both a reflective mode and transparent mode.

A liquid crystal display device according to the present invention is defined in claim 9.

The liquid crystal display device according to the present invention can be characterised in that each of a plurality of pixel regions is provided with one of said reflective electrodes, that each of said reflective electrodes has a plurality of holes, and that said thickness changing region is provided in a peripheral portion of each hole, wherein a ratio of a width of said thickness changing region to a maximum value of thickness of said thickness changing region is preferably equal to or greater than 1.5.

The liquid crystal display device according to the present invention can be characterised in that each of a plurality of pixel regions is provided with at least two of said reflective electrodes, and that said thickness changing region is provided in a peripheral portion of each of said plurality of reflective electrodes, wherein a ratio of a width of said thickness changing region to a maximum value of thickness of said thickness changing region is preferably equal to or greater than 1.5.

The liquid crystal display device according to the present invention is preferably characterised in that said thickness changing region has a slope whose inclination is greater than 0 degree and smaller than 10 degrees.

### BRIEF DESCRIPTION OF THE DRAWINGS

Fig.1 is a plan view of a liquid crystal display device of transflective type having a passive matrix structure which is one example of a liquid crystal display device according to the present invention.
Fig.2 is a cross-sectional view of the device taken along a line I-I in Fig.1.
Fig.3 is a plan view of the substrate 1 on which the scanning electrodes 2 have been formed.
Fig.4 is a cross-sectional view of the substrate I taken along a line II-II in Fig.3.
Fig.5 is a plan view of the substrate after the reflective electrode film 3 has been formed.
Fig.6 is a cross-sectional view of the substrate taken along a line III-III in Fig.5.
Fig.7 is a plan view of the substrate after the resist coating has been exposed to light and developed.
Fig.8 is a cross-sectional view of the substrate taken along a line IV-IV in Fig.7.
Fig.9 is a cross-sectional view of the substrate after the remaining portions 4 have been baked.
Fig. 10 is an enlarged view of a region Z shown in Fig.9.
Fig. 11 is a plan view of the substrate after the reflective electrode film 3 has been dry-etched.
Fig.12 is a cross-sectional view of the substrate taken along a line V-V in Fig.11.
Fig.13 is an enlarged view of a region Z shown in Fig.12.
Fig.14 is a plan view of the substrate which is provided with the underlayer below the reflective electrode.
Fig.15 is a cross-sectional view the substrate taken along a line VI-VI in Fig.14.
Fig.16 is a plan view of the resist coating immediately after the resist coating is exposed to light and developed in such a way that remaining portions having different shape from Fig. 7 remain.
Fig.17 is a cross-sectional view taken along a line VII-VII in Fig.16.
Fig.18 is a cross-sectional view of the substrate after the portions 40 of the resist coating are baked.
Fig.19 is an enlarged view of a region Z shown in Fig.18.
Fig.20 is a cross-sectional view of the dry-etched reflective electrode film 3.

### DESCRIPTION OF THE PREFERRED EMBODIMENT(S)

Hereinafter, an embodiment of the present invention will be described referring to a liquid crystal display device of transflective type.

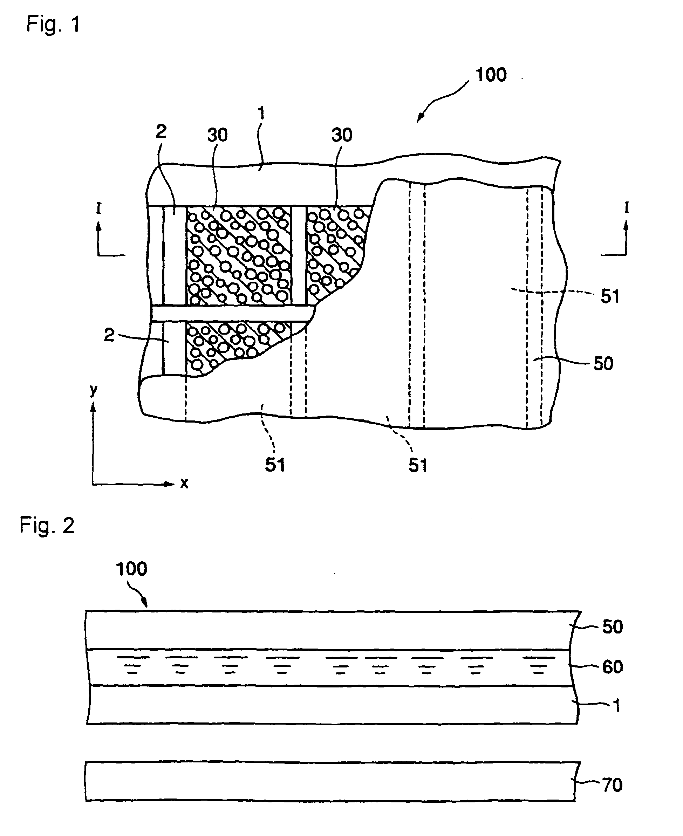

Fig.1 is a plan view of a liquid crystal display device of transflective type having a passive matrix structure which is one example of a liquid crystal display device according to the present invention. Fig.2 is a cross-sectional view of the device taken along a line I-I in Fig.1.

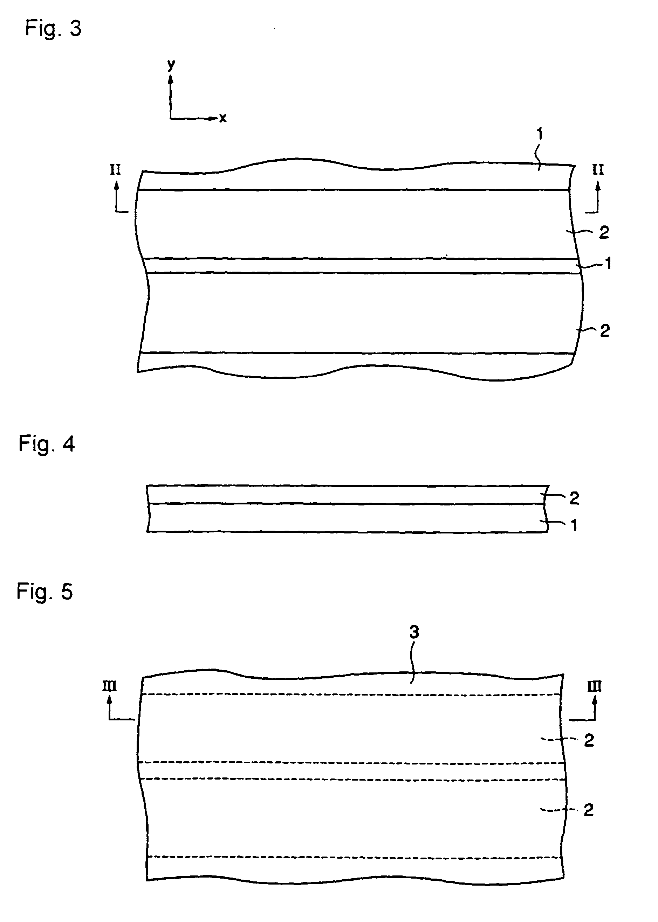

This liquid crystal display device 100 comprises two substrates 1 and 50 which are opposed each other with a liquid crystal layer 60 (see Fig.2) sandwiched therebetween. In Fig.1, a portion of the substrate 50 is cut away in such a way that a portion of the substrate 1 is visible. In Fig. 2, electrodes and others formed on the substrates 1 and 50 are omitted. Scanning electrodes 2 extending in the x direction (see, for example, Fig.3 described later) are formed on the substrate 1 and a reflective electrode 30 is formed on the scanning electrode 2 at an area corresponding to each of the pixel regions. Data electrodes 51 extending in the y direction are formed on the other substrate 50. A backlight 70 is provided at the back side of the substrate 1.

Hereinafter, it will be described that the method of manufacturing the substrate 1 on which the reflective electrodes 30 being the characteristic portion of this embodiment have been formed.

First, the scanning electrodes 2 are formed on the substrate I (see Fig.3).

Fig.3 is a plan view of the substrate 1 on which the scanning electrodes 2 have been formed. Fig.4 is a cross-sectional view of the substrate 1 taken along a line II-II in Fig.3.

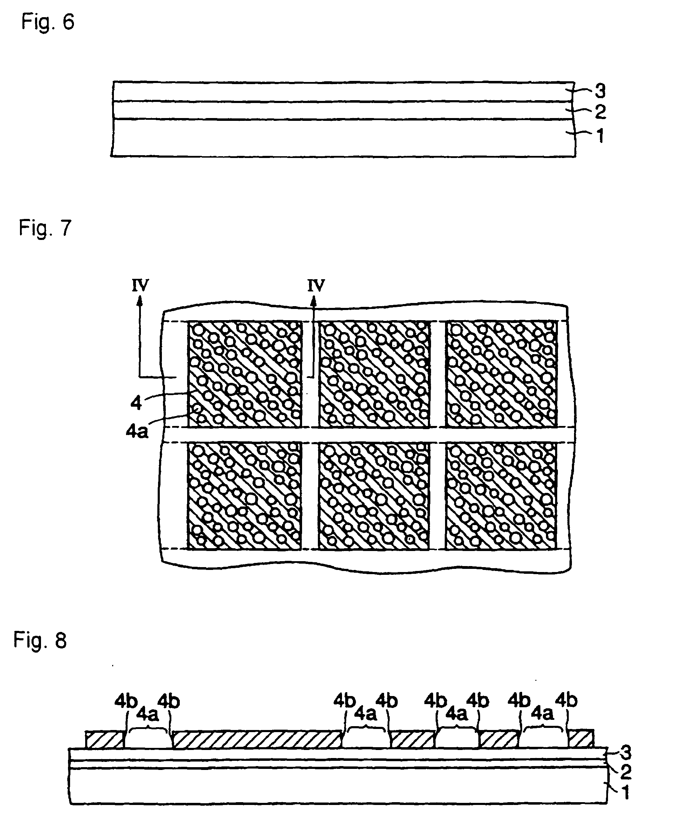

The scanning electrodes 2 extending in the x direction are formed on the substrate 1. The scanning electrodes 2 can be formed by forming a light transmissive film (e.g., ITO film) on the substrate I and patterning the light transmissive film into a form that corresponds to each of the scanning electrodes 2. Fig.3 shows only two scanning electrodes 2, but it is noted that a large number of scanning electrodes 2 are actually formed. After forming the scanning electrodes 2, a reflective electrode film 3 for forming the reflective electrode 30 is formed (see Fig.5 and Fig.6).

Fig.5 is a plan view of the substrate after the reflective electrode film 3 has been formed. Fig.6 is a cross-sectional view of the substrate taken along a line III-III in Fig.5.

In this embodiment, the reflective electrode film 3 is formed by layering a metallic material having a high melting point (for example, Ti, Mo and others) and a metallic material (for example A1), but other materials may also be used. Moreover, the reflective electrode film 3 may also have a single-layer structure. After forming the reflective electrode film 3, the reflective electrode 30 (see Fig. 1) is formed by patterning the reflective electrode film 3. For the purpose of patterning the reflective electrode film 3, a resist coating is formed on this reflective electrode film 3 by applying a resist on the film 3 and this resist coating is exposed to light and developed (see Fig.7 and Fig.8).

Fig.7 is a plan view of the substrate after the resist coating has been exposed to light and developed. Fig.8 is a cross-sectional view of the substrate taken along a line IV-IV in Fig.7.

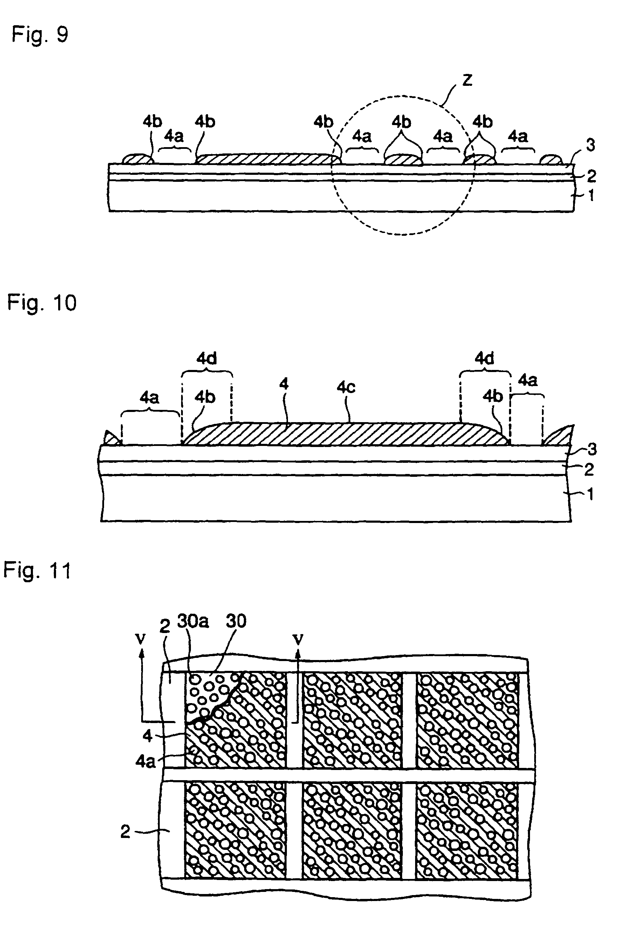

In this embodiment, the resist coating is exposed to light and developed in such a way that the portions 4 of the resist coating which correspond to the respective pixel region remain. In Figs.7 and 8, the portions (hereinafter, referred to as "remaining portions") 4 of the resist coating are shown by hatched lines. A plurality of holes 4a for exposing the reflective electrode film 3 are formed in the remaining portions 4. After the resist coating is exposed to light and developed, the remaining portions 4 are baked (see Fig.9).

Fig.9 is a cross-sectional view of the substrate after the remaining portions 4 have been baked. Fig.10 is an enlarged view of a region Z shown in Fig.9.

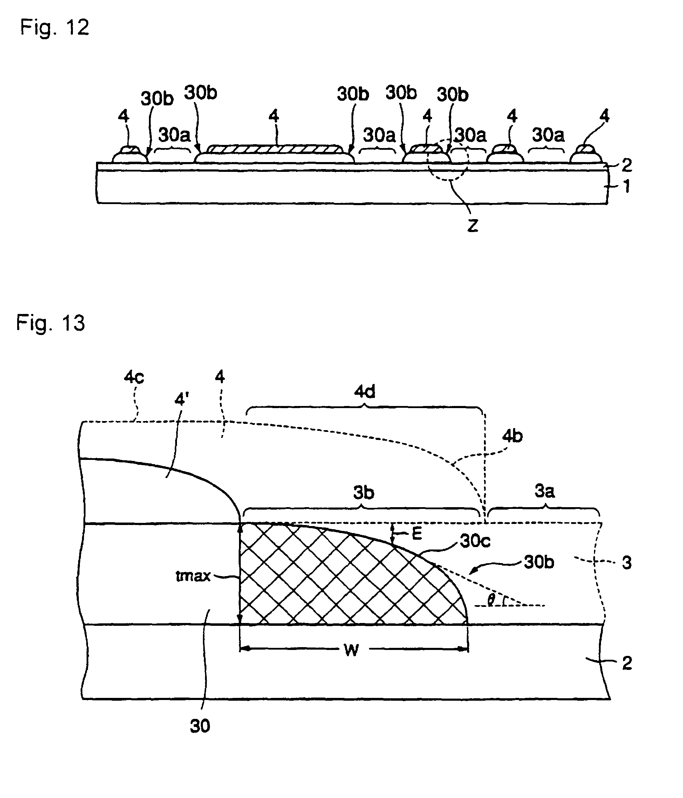

Before the remaining portions 4 are baked (see Fig.8), an inner wall surface 4b of each hole 4a extends vertically with respect to the surface of the substrate 1. However, by means of the baking of the remaining portions 4, the remaining portions 4 melt, so that the shape of the inner wall surface 4b is changed to a roundish shape as shown in Fig. 10. As a result of changing the shape of this inner wall 4b, a thickness of a periphery 4d of the hole 4a increases continuously from the inner wall 4b toward a top surface 4c of the remaining portion 4. After the remaining portions 4 are baked, the reflective electrode film 3 is dry-etched using the remaining portions 4 as etching masks (see Fig.11 and Fig.12).

Fig. 11 is a plan view of the substrate after the reflective electrode film 3 has been dry-etched. Fig.12 is a cross-sectional view of the substrate taken along a line V-V in Fig.11.

By means of the dry-etching of the reflective electrode film 3, portions of the reflective electrode film 3 which are covered with the remaining portions 4 (hereinafter, referred to as "covered portions") remain and portions of the reflective electrode film 3 which surround the covered portions are removed. Therefore, the reflective electrode 30 is formed below each of the remaining portions 4. For the etching gas, for example, BCl₃/Cl₂ can be used. In Fig.11, the remaining portion 4 at the top left is partially cut away, so that a part of the reflective electrode 30 formed below the remaining portion 4 at the top left is visible. By means of the dry-etching of the reflective electrode film 30, a large number of holes 30a for exposing the scanning electrode 2 can be formed in each reflective electrode 30 since each of the remaining portions 4 has a large number of holes 4a. Formation of the holes 30a in the reflective electrode 30 allows light emitted from the backlight 70 (see Fig.2) to enter a liquid crystal layer 60 (see Fig.2) through the holes 30a of the reflective electrode 30, so that the liquid crystal display device 100 (see Fig.1) can be used in a transparent mode. Furthermore, a film thickness changing region 30b whose film thickness changes continuously is formed in the periphery of each hole 30a by forming the holes 30a in the reflective electrode 30. Hereinafter, it will be described that how this film thickness changing region 30b is formed with reference to Fig.13.

Fig.13 is an enlarged view of a region Z shown in Fig.12.

In Fig.13, the reflective electrode film 3 and the remaining portion 4 before dry-etching are shown by dashed lines, and the reflective electrode 30 (that is, the dry-etched reflective electrode film 3) and the remaining portion 4' after dry-etching are shown by solid lines.

Before the dry-etching is started , a first portion 3a of the reflective electrode film 3 is not covered with the remaining portion 4. Therefore, the dry etching cause the first portion 3a of the reflective electrode film 3 to be removed. Furthermore, the dry etching cause the remaining portion 4 to be reduced, so that the remaining portion 4 is finally changed into the remaining portion 4' having a shape shown by a solid line. Therefore, a second portion 3b of the reflective electrode film 3 is covered with the remaining portion 4 before the dry-etching is started, but the second portion 3b is exposed during the dry etching, so that not only the first portion 3a but also the second portion 3b are etched. However, it is noted that the periphery 4d of the hole 4a formed in the remaining portion 4 shows a distribution of film thickness which increases continuously from the inner wall surface 4b toward the top surface 4c of the remaining portion 4. The times between the start of etching and the exposure of the second portion 3b are different among the different regions within the second portion 3b because of the difference of the film thickness within the periphery 4d. Because the times of exposure are different, an etching depth E of the second portion 3b changes continuously within the second portion 3b.

Since the reflective electrode film 3 is etched by means of the process described above, a thickness changing region 30b whose thickness changes continuously is formed in the periphery (shaded area in Fig.13) of the hole 30a formed in the reflective electrode 30. An inclination angle θ at each position of a surface 30c of the thickness changing region 30b is preferably within a range which is greater than 0 degree and smaller than 10 degrees. When the inclination angle θ is within the range described above, the reflective electrode 30 can have a good reflective characteristic. It is not required that the inclination angle θ is within the range greater than 0 degree and smaller than 10 degrees over the whole surface 30c of the thickness changing region 30b. However, the inclination angle θ is preferably within the range greater than 0 degree and smaller than 10 degrees over more than half of the surface 30c of the thickness changing region 30b to secure a good reflective characteristic. For this purpose, it is considered that, for example, the reflective electrode film 3 is etched until a ratio R of a maximum value tₘₐₓ of thickness of the thickness changing region 30b to a width w of the thickness changing region 30b becomes equal to or greater than R=1.5. This allows the inclination θ to be within the range greater than 0 degree and smaller than 10 degrees over more than half of the surface 30c of the thickness changing region 30b.

After the etching of the reflective electrode film 3 is completed, the remaining portion 4 is removed.

The reflective electrode 30 is formed by means of the process described above.

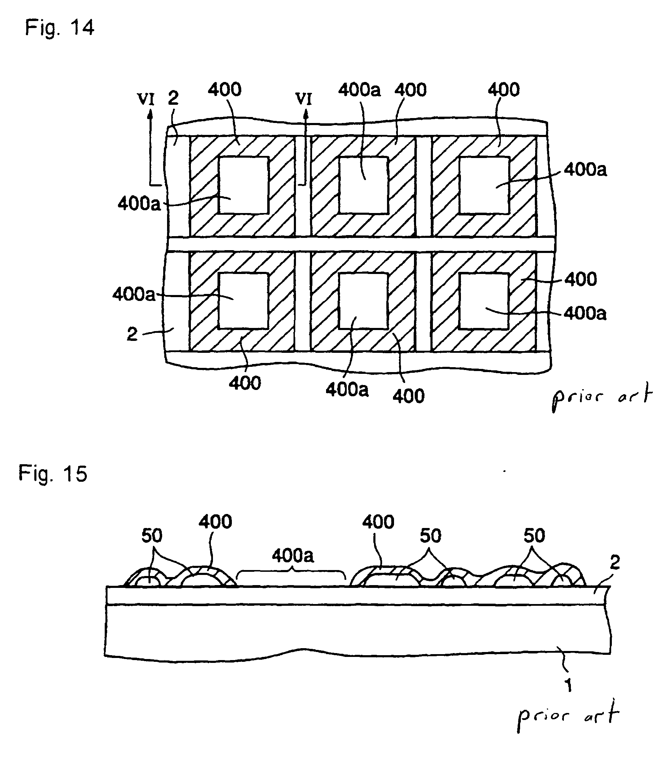

In this embodiment, since the reflective electrode 30 has the thickness changing region 30b, this reflective electrode 30 can have a good reflective characteristic. In contrast, in order that the reflective electrode 30 may have a good reflective characteristic, it is considered to form an underlayer below the reflective electrode 30 for providing the reflective electrode 30 with a good reflective characteristic, instead of forming the thickness changing region 30b in the reflective electrode 30. However, the method of forming the underlayer below the reflective electrode 30 has the following disadvantage. This disadvantage will be described with reference to Figs. 14 and 15.

Fig. 14 is a plan view of the substrate which is provided with the underlayer below the reflective electrode. Fig.15 is a cross-sectional view the substrate taken along a line VI-VI in Fig.14.

In the reflective electrode 400 (shown by shaded areas), a window 400a for passing through a light from the backlight is formed. Below the reflective electrode 400, an underlayer 50 for providing the reflective electrode 400 with projections and recesses is formed. Forming the underlayer 50 below the reflective electrode 400 makes the reflective electrode 400 have a desired reflective characteristic. However, in the method shown in Figs.14 and 15, in order that the reflective electrode 400 may have projections and depressions, there is a need to carry out not only a patterning step for forming the reflective electrode 400 but also a step of forming the underlayer 50 for providing the reflective electrode 400 with projections and depressions.

In contrast, according to this embodiment, the thickness changing region 30b to be formed in the reflective electrode 30 is formed while the reflective electrode film 3 is being patterned. Thus, this embodiment can reduce the number of manufacturing steps and a manufacturing cost compared with the prior art method shown in Figs.14 and 15.

In the embodiment, in order that the reflective electrode 30 may have the thickness changing region 30b, the resist coating is exposed to light and developed in such a way that the remaining portions 4 each having many holes 4a remain as shown in Fig.7. However, there is not always a need to expose to light and develop the resist coating in such a way that the remaining portions 4 each having many holes 4a remain. The resist coating may also be exposed to light and developed in such a way that remaining portions having different shape from Fig. 7 remain. An example where remaining portions having different shape from Fig. 7 remain will be described below.

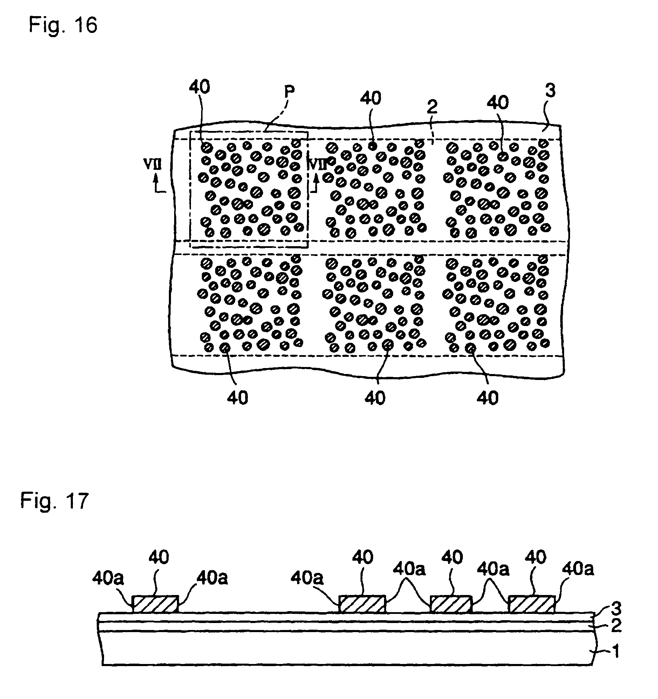

Fig.16 is a plan view of the resist coating immediately after the resist coating is exposed to light and developed in such a way that remaining portions having different shape from Fig. 7 remain. Fig.17 is a cross-sectional view taken along a line VII-VII in Fig.16.

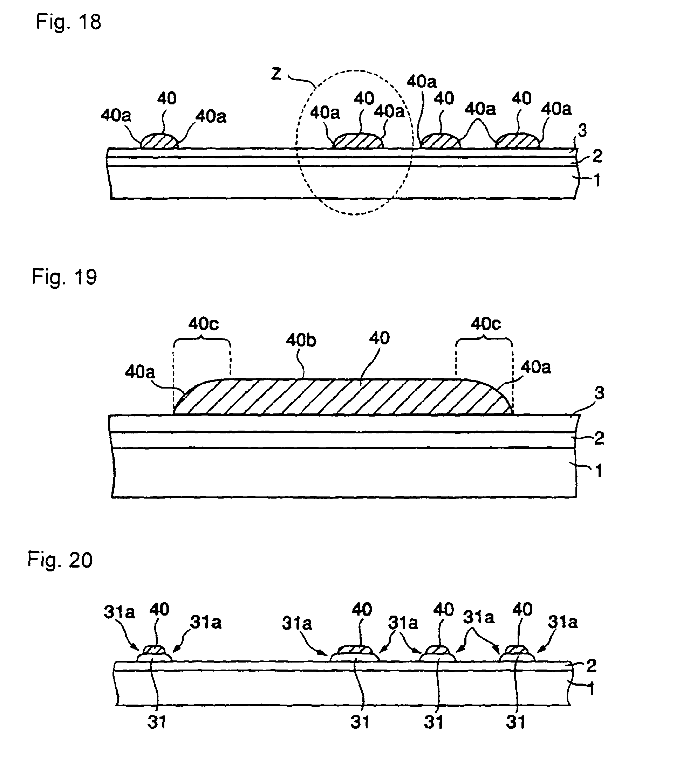

In Fig.16 and Fig.17, the resist coating is exposed to light and developed in such a way that many remaining portions 40 having almost round shape remain in an area corresponding to each pixel region P. In Fig.16 and Fig.17, the areas where the remaining portions 40 exist are shown by hatched lines. After the resist coating is exposed to light and developed, the remaining portions 40 of the resist coating are baked (see Fig.18 and Fig.19).

Fig.18 is a cross-sectional view of the substrate after the portions 40 of the resist coating are baked. Fig.19 is an enlarged view of a region Z shown in Fig.18.

Before the remaining portions 40 of the resist coating are baked (see Fig.17), side surface 40a of each remaining portions 40 extends vertically with respect to the surface of the substrate 1. However, through the post-baking of the remaining portions 40 of the resist coating, the remaining portions 40 melt, so that the shape of the side surface 40a is changed to a roundish shape as shown in Fig. 19. As a result of changing the shape of the side surface 40a, a thickness of an outer edge 40c of the remaining portion 40 increases continuously from the side surface 40a toward a top surface 40b of the remaining portion 40. The reflective electrode film 3 is dry-etched using the remaining portions 40 as etching masks (see Fig.20)

Fig.20 is a cross-sectional view of the dry-etched reflective electrode film 3.

The dry-etching of the reflective electrode film 3 using the remaining portions 40 as etching masks causes the reflective electrode 31 to be formed below each of the remaining portions 40. Therefore, a thickness changing region 31a whose thickness changes continuously is formed in an outer edge of the reflective electrode 31 in the same way as described with reference to Fig.13. Thus, this reflective electrode 31 can have a good reflective characteristic as in the case of the reflective electrode 30 (see Fig.11).

In the embodiment, the liquid crystal display device 100 in which a passive matrix scheme is adopted is shown, but the present invention is also applicable to a liquid crystal display device in which for example an active matrix scheme using a switching element such as TFT is adopted.

The present invention provides a method of forming a reflective electrode with a reduced number of manufacturing steps and a reduced manufacturing cost, and provide a liquid crystal display device to which this method is applied.

## Claims

1. A method of forming a plurality of reflective electrodes on a substrate (1) having pixel regions (30), wherein said method comprises the steps of:
forming a first film (3) on said substrate, said first film having a material of said reflective electrode; and
patterning said first film in such a way that a portion (30b) of said first film remains on said substrate, said remaining portion (30b) defining, in a pixel region (p), at least a first reflective electrode (30b) of said plurality of reflective electrodes, and at least one area for passing backlight (30a),
**characterized in that**, in said patterning step, a thickness changing region (30c) in which the thickness of said first film changes continuously is formed in said remaining portion, the thickness changing region corresponding to a border area between the at least first reflective electrode and the at least one area for passing backlight.

2. The method of claim 1, wherein the remaining portion of the first film includes, in each pixel region, one of said plurality of reflective electrodes, and the at least one area for passing backlight is constituted by a plurality of holes (30a) in said one of said plurality of reflective electrodes, the thickness changing region corresponding to the periphery of the plurality of holes.

3. A method as claimed in claim 1 to 2, wherein, in said patterning step, said thickness changing region is formed so as to have a slope whose inclination (θ) greater than 0 degree and smaller than 10 degrees.

4. A method as claims in claims 1 to 3, wherein, in said patterning step, said thickness changing region is formed in such a way that a ratio of a width (w) of said thickness changing region to a maximum value (tₘₐₓ) of thickness of said thickness changing region is equal to or greater than 1.5.

5. A method as claimed in any one of claims 1 to 4, wherein said patterning step comprises:
a first step of forming a photosensitive film (4) on said first film;
a second step of exposing said photosensitive film to light and developing it to pattern said photosensitive film into a form corresponding to a pattern of said plurality of reflective electrodes;
a third step of baking said patterned photosensitive film; and
a fourth step of dry-etching said first film using said baked photosensitive film as an etching mask.

6. A method as claimed in claim 5, wherein each of a plurality of pixel regions is provided with one of said reflective electrodes, wherein each of said reflective electrodes has a plurality of holes, and wherein, in said second step, said photosensitive film is patterned in such a way that a portion of said photosensitive film corresponding to a periphery of each of said plurality of reflective electrodes and a portion of said photosensitive film corresponding to each of said plurality of holes are removed.

7. A method as claimed in claim 5, wherein each of a plurality of pixel regions is provided with at least two of said reflective electrodes, and wherein, in said second step, said photosensitive film is patterned in such a way that a portion of said photosensitive film corresponding to a periphery of each of said plurality of reflective electrodes is removed.

8. A method as claimed in any one of claims 1 to 7, wherein said method comprises a step of forming a plurality of transparent electrodes before said step of forming said first film.

9. A liquid crystal display device comprising a plurality of reflective electrodes and a substrate (1) having pixel regions (30), a pixel region including at least a first reflective electrode (30b) of said plurality of reflective electrodes and at least one area (30a) for passing backlight, **characterized in that** the pixel region further has a thickness changing region (30c) in which a thickness of the film forming the first reflective electrode changes continuously, the thickness changing region corresponding to a border area between the at least first reflective electrode and the at least one area for passing backlight.

10. A liquid crystal display device as claims in claim 9, wherein each of a plurality of pixel regions is provided with one of said reflective electrodes, wherein each of said reflective electrodes has a plurality of holes forming the area for passing backlight, and wherein said thickness changing region is provided in a periphery of each hole.

11. A liquid crystal display device as claimed in claim 10, wherein a ratio of a width (w) of said thickness changing region to a maximum value (tₘₐₓ) of thickness of said thickness changing region is equal to or greater than 1.5.

12. A liquid crystal display device as claimed in claim 9, wherein each of a plurality of pixel regions is provided with at least two of said reflective electrodes (31), and wherein said thickness changing region is provided in an outer edge of each of said plurality of reflective electrodes.

13. A liquid crystal device as claimed in claim 12, wherein a ratio of a width (w) of said thickness changing region to a maximum value (tₘₐₓ) of thickness of said thickness changing region is equal to or greater than 1.5.

14. A liquid crystal display device as claimed in any one of claims 9 to 13, wherein said thickness changing region has a slope whose inclination (θ) is greater than 0 degree and smaller than 10 degrees.

15. A liquid crystal display device as claimed in any one of claims 9 to 14, wherein a transparent electrode is formed between the substrate and the said reflective electrode.

## Patentansprüche

1. Verfahren zur Bildung von mehreren reflektierenden Elektroden auf einem Substrat (1) mit Pixelbereichen (30), wobei das Verfahren die folgenden Schritte umfasst:
- Bilden eines ersten Films (3) auf dem Substrat, wobei der erste Film ein Material der reflektierenden Elektrode hat, und
- Strukturieren des ersten Films in einer solchen Weise, dass ein Teil (30b) des ersten Films auf dem Substrat verbleibt, wobei der verbleibende Teil (30b) in einem Pixelbereich (P) wenigstens eine erste reflektierende Elektrode (30b) der mehreren reflektierenden Elektroden und wenigstens einen Bereich zum Passieren von Hintergrundlicht (30a) definiert,
**dadurch gekennzeichnet, dass**
in dem Strukturierungsschritt ein sich in der Dicke ändernder Bereich (30c), in welchem sich die Dicke des ersten Films kontinuierlich ändert, in dem verbleibenden Teil gebildet wird, wobei der sich in der Dicke ändernde Bereich einem Grenzbereich zwischen der wenigstens ersten reflektierenden Elektrode und dem wenigstens einen Bereich zum Passieren von Hintergrundlicht entspricht.

2. Verfahren nach Anspruch 1, wobei der verbleibende Teil des ersten Films in jedem Pixelbereich eine der mehreren reflektierenden Elektroden umfasst, und der wenigstens eine Bereich zum Passieren von Hintergrundlicht aus mehreren Löchern (30a) in der einen der mehreren reflektierenden Elektroden besteht, wobei der sich in der Dicke ändernde Bereich der Peripherie der mehreren Löcher entspricht.

3. Verfahren nach Anspruch 1 bis 2, wobei in dem Strukturierungsschritt der sich in der Dicke ändernde Bereich mit einer Flanke gebildet wird, deren Neigung (θ) größer als 0 Grad und kleiner als 10 Grad ist.

4. Verfahren nach Anspruch 1 bis 3, wobei in dem Strukturierungsschritt der sich in der Dicke ändernde Bereich in einer solchen Weise gebildet wird, dass ein Verhältnis einer Breite (W) des sich in der Dicke ändernden Bereichs zu einem maximalen Wert (tmax) der Dicke des sich in der Dicke ändernden Bereichs größer gleich 1,5 ist.

5. Verfahren nach einem der Ansprüche 1 bis 4, wobei der Strukturierungsschritt folgendes umfasst:
- einen ersten Schritt des Bildens eines lichtempfindlichen Films (4) auf dem ersten Film,
- einen zweiten Schritt des Belichtens und Entwickelns des lichtempfindlichen Films, um den lichtempfindlichen Film in einer Form entsprechend einer Struktur der mehreren reflektierenden Elektroden zu strukturieren,
- einen dritten Schritt des Backens des strukturierten lichtempfindlichen Films, und
- einen vierten Schritt des Trockenätzens des ersten Films unter Verwendung des gebackenen lichtempfindlichen Films als eine Ätzmaske.

6. Verfahren nach Anspruch 5, wobei jeder von mehreren Pixelbereichen mit einer der reflektierenden Elektroden versehen ist, wobei jede der reflektierenden Elektroden mehrere Löcher hat, und wobei in dem zweiten Schritt der lichtempfindliche Film in einer solchen Weise strukturiert wird, dass ein Teil des lichtempfindlichen Films entsprechend einer Peripherie jeder der mehreren reflektierenden Elektroden und ein Teil des lichtempfindlichen Films entsprechend einem jeden der mehreren Löcher entfernt wird.

7. Verfahren nach Anspruch 5, wobei jeder der mehreren Pixelbereiche mit wenigstens zwei reflektierenden Elektroden versehen ist, und wobei in dem zweiten Schritt der lichtempfindliche Film in einer solchen Weise strukturiert wird, dass ein Teil des lichtempfindlichen Films entsprechend einer Peripherie jeder der mehreren reflektierenden Elektroden entfernt wird.

8. Verfahren nach einem der Ansprüche 1 bis 7, wobei das Verfahren einen Schritt des Bildens von mehreren transparenten Elektroden vor dem Schritt des Bildens des ersten Films umfasst.

9. Flüssigkristallanzeigevorrichtung aufweisend mehrere reflektierende Elektroden und ein Substrat (1) mit Pixelbereichen (30), wobei ein Pixelbereich wenigstens eine erste reflektierende Elektrode (30b) der mehreren reflektierenden Elektroden und wenigstens einen Bereich (30b) zum Passieren von Hintergrundlicht umfasst,
**dadurch gekennzeichnet, dass**
der Pixelbereich weiterhin einen sich in der Dicke ändernden Bereich (30c) hat, in dem sich eine Dicke des Films, der die erste reflektierende Elektrode bildet, kontinuierlich ändert, wobei der sich in der Dicke ändernde Bereich einem Randbereich zwischen der wenigstens ersten reflektierenden Elektrode und dem wenigstens einen Bereich zum Passieren von Hintergrundlicht entspricht.

10. Flüssigkristallanzeigevorrichtung nach Anspruch 9, wobei jeder der mehreren Pixelbereiche mit einer der reflektierenden Elektroden versehen ist, wobei jede der reflektierenden Elektroden mehrere Löcher hat, die den Bereich zum Passieren von Hintergrundlicht bilden, und wobei der sich in der Dicke ändernde Bereich in einer Peripherie eines jeden Lochs vorgesehen ist.

11. Flüssigkristallanzeigevorrichtung nach Anspruch 10, wobei ein Verhältnis einer Breite (W) des sich in der Dicke ändernden Bereichs zu einem maximalen Wert (tmax) der Dicke des sich in der Dicke ändernden Bereichs größer gleich 1,5 ist.

12. Flüssigkristallanzeigevorrichtung nach Anspruch 9, wobei jeder der mehreren Pixelbereiche mit wenigstens zwei reflektierenden Elektroden (31) versehen ist, und wobei der sich in der Dicke ändernde Bereich in einem Außenrand jeder der mehreren reflektierenden Elektroden vorgesehen ist.

13. Flüssigkristallvorrichtung nach Anspruch 12, wobei ein Verhältnis einer Breite (W) des sich in der Dicke ändernden Bereichs zu einem maximalen Wert (tmax) der Dicke des sich in der Dicke ändernden Bereichs größer gleich 1,5 ist.

14. Flüssigkristallanzeigevorrichtung nach einem der Ansprüche 9 bis 13, wobei der sich in der Dicke ändernde Bereich eine Flanke aufweist, deren Neigung (θ) größer als 0 Grad und kleiner als 10 Grad ist.

15. Flüssigkristallanzeigevorrichtung nach einem der Ansprüche 9 bis 14, wobei eine transparente Elektrode zwischen dem Substrat und der reflektierenden Elektrode gebildet ist.

## Revendications

1. Un procédé de formation d'une pluralité d'électrodes réflectives sur un substrat (1) ayant des zones de pixels (30), dans lequel ledit procédé comprend les étapes consistant à :
- former une première pellicule (3) sur ledit substrat, ladite première pellicule ayant un matériau de ladite électrode réflective ; et
- profiler ladite première pellicule de manière à ce qu'une portion (30b) de ladite première pellicule reste sur ledit substrat, ladite portion restante (30b) définissant, dans une zone de pixels (P), au moins une première électrode réflective de ladite pluralité d'électrodes réflectives, et au moins une zone pour passer le rétroéclairage (30a),
**caractérisé en ce que**, à ladite étape de profilage, une zone de changement d'épaisseur (30c) dans laquelle l'épaisseur de ladite première pellicule change continuellement est formée dans ladite portion restante de ladite première pellicule, la zone changeant d'épaisseur correspondant à une zone de frontière entre l'au moins la première électrode réflective et l'au moins une zone pour passer le rétroéclairage.

2. Le procédé selon la revendication 1, dans lequel la portion restante de la première pellicule comprend, dans chaque zone de pixels, l'une de ladite pluralité d'électrodes réflectives, et l'au moins une zone pour passer le rétroéclairage est constituée d'une pluralité de trous (30a) dans ladite une de ladite pluralité d'électrodes réflectives, la zone changeant d'épaisseur correspondant à la périphérie de la pluralité de trous.

3. Un procédé selon la revendication 1 ou 2, dans lequel, à ladite étape de profilage, ladite zone changeant d'épaisseur est formée de manière à avoir une pente dont l'inclinaison (θ) est supérieure à 0 degré et inférieure à 10 degrés.

4. Un procédé selon l'une quelconque des revendications 1 à 3, dans lequel, à ladite étape de profilage, ladite zone changeant d'épaisseur est formée de manière à ce qu'un rapport d'une largeur (w) de ladite zone changeant d'épaisseur sur une valeur maximale (tₘₐₓ) de l'épaisseur de ladite zone changeant d'épaisseur soit supérieur ou égal à 1,5.

5. Un procédé selon l'une quelconque des revendications 1 à 4, dans lequel ladite étape de profilage comprend :
- une première étape consistant à former une pellicule photosensible (4) sur ladite première pellicule ;
- une deuxième étape consistant à exposer ladite pellicule photosensible à la lumière et à la développer pour profiler ladite pellicule photosensible dans une forme correspondant à un profil de ladite pluralité d'électrodes réflectives ;
- une troisième étape consistant à cuire ladite pellicule photosensible profilée ; et
- une quatrième étape consistant à graver à sec ladite première pellicule en utilisant une pellicule photosensible cuite en tant que masque de gravage.

6. Un procédé selon la revendication 5, dans lequel chacune d'une pluralité de zones de pixels est munie de l'une desdites électrodes réflectives, dans lequel chacune desdites électrodes respectives a une pluralité de trous, et dans lequel, à ladite deuxième étape, ladite pellicule photosensible est profilée de manière à ce qu'une portion de ladite pellicule photosensible correspondant à une périphérie de chacune de ladite pluralité d'électrodes réflectives et une portion de ladite pellicule photosensible correspondant à chacune de ladite pluralité de trous soient enlevées.

7. Un procédé selon la revendication 5, dans lequel chacune d'une pluralité de zones de pixels est munie d'au moins deux desdites électrodes réflectives, et dans lequel, à ladite deuxième étape, ladite pellicule photosensible est profilée de manière à ce qu'une portion de ladite pellicule photosensible correspondant à une périphérie de chacune de ladite pluralité d'électrodes réflectives soit enlevée.

8. Un procédé selon l'une quelconque des revendications 1 à 7, dans lequel ledit procédé comprend une étape consistant à former une pluralité d'électrodes transparentes avant ladite étape consistant à former ladite première pellicule.

9. Un dispositif d'affichage à cristaux liquides comprenant une pluralité d'électrodes réflectives et un substrat (1) ayant des zones de pixels (30), une zone de pixels comprenant au moins une première électrode réflective (30b) de ladite pluralité d'électrodes réflectives et au moins une zone (30a) pour passer le rétroéclairage, **caractérisé en ce que** la zone de pixels a en outre une zone changeant d'épaisseur (30c) dans laquelle une épaisseur de la pellicule formant la première électrode réflective change continuellement, la zone changeant d'épaisseur correspondant à une zone de frontière entre l'au moins la première électrode réflective et l'au moins une zone pour passer le rétroéclairage.

10. Un dispositif d'affichage à cristaux liquides selon la revendication 9, dans lequel chacune d'une pluralité de zones de pixels est munie de l'une desdites électrodes réflectives, dans lequel chacune desdites électrodes réflectives a une pluralité de trous formant la zone pour passer le rétroéclairage, et dans lequel ladite zone changeant d'épaisseur est fournie à une périphérie de chaque trou.

11. Un dispositif d'affichage à cristaux liquides selon la revendication 10, dans lequel un rapport d'une largeur (w) de ladite zone changeant d'épaisseur sur une valeur maximale (tₘₐₓ) de l'épaisseur de ladite zone changeant d'épaisseur est supérieur ou égal à 1,5.

12. Un dispositif d'affichage à cristaux liquides selon la revendication 9, dans lequel chacune d'une pluralité de zones de pixels est munie d'au moins deux desdites électrodes réflectives (31), et dans lequel ladite zone changeant d'épaisseur est fournie dans un bord extérieur de chacune de ladite pluralité d'électrodes réflectives.

13. Un dispositif d'affichage à cristaux liquides selon la revendication 12, dans lequel un rapport d'une largeur (w) de ladite zone changeant d'épaisseur sur une valeur maximale (tₘₐₓ) de l'épaisseur de ladite zone changeant d'épaisseur est supérieur ou égal à 1,5.

14. Un dispositif d'affichage à cristaux liquides selon l'une quelconque des revendications 9 à 13, dans lequel ladite zone changeant d'épaisseur a une pente dont l'inclinaison (θ) est supérieure à 0 degré et inférieure à 10 degrés.

15. Un dispositif d'affichage à cristaux liquides selon l'une quelconque des revendications 9 à 14, dans lequel une électrode transparente est formée entre le substrat et ladite électrode réflective.
